# EUROPÄISCHE PATENTSCHRIFT

(11) **EP 3 434 632 B1**
(45) Veröffentlichungstag und Bekanntmachung des Hinweises auf die Patenterteilung: **13.11.2024**
(21) Anmeldenummer: 17183046.6
(22) Anmeldetag: 25.07.2017
(51) Int. Cl.: B65G 53/08

(54) **VORRICHTUNG UND VERFAHREN ZUM FÖRDERN VON ZUMINDEST ÜBERWIEGEND AUS FESTKÖRPERPARTIKELN BESTEHENDEM MATERIAL, INSBESONDERE PULVERMATERIAL, BEISPIELSWEISE TROCKENMÖRTEL**
DEVICE AND METHOD FOR CONVEYING MATERIAL CONSISTING PREDOMINANTLY OF SOLID PARTICLES, IN PARTICULAR POWDER MATERIAL, FOR EXAMPLE DRY MORTAR
DISPOSITIF ET PROCÉDÉ D'ACHEMINEMENT DE MATÉRIAU CONSTITUÉ D'AU MOINS PRINCIPALEMENT DE PARTICULES SOLIDES, EN PARTICULIER POUDRE, PAR EXEMPLE MORTIER SEC

(43) Veröffentlichungstag der Anmeldung: 30.01.2019
(73) Patentinhaber: Knauf PFT GmbH & Co. KG, 97346 Iphofen (DE)
(72) Erfinder: Arnold, Josef, 97346 Iphofen (DE)
(74) Vertreter: Schröer, Gernot H.

(56) Entgegenhaltungen:
- EP-A1- 1 688 718
- AU-B2- 2011 226 842

## Beschreibung

Die Erfindung betrifft eine Vorrichtung zum Fördern von zumindest überwiegend aus Feststoffpartikeln bestehendem Material, insbesondere Pulvermaterial, beispielsweise Trockenmörtel, mit einem Fördergefäß, das mit einer Einlassöffnung an eine Auslassöffnung eines Vorratsbehälters, zum Beispiel eines Silos, ankoppelbar oder angekoppelt ist. Das Fördergefäß weist einen Fördergefäßauslass auf, an den eine Förderleitung, insbesondere eine Schlauchleitung, anschließbar oder angeschlossen ist. Das Fördergefäß ist weiterhin mit Förderluft zum Transportieren des zu fördernden Materials in Richtung des Fördergefäßauslasses beaufschlagbar oder beaufschlagt. Ein Schneckenförderer ist zumindest teilweise innerhalb des Fördergefäßes zum Transport und Dosierung von Material angeordnet, dessen Transportstrecke zu einem auslassseitigen Innenbereich des Fördergefäßes führt. Die Erfindung betrifft ferner ein Verfahren zum Fördern von derartigem, zumindest überwiegend aus Feststoffpartikeln bestehendem Material, insbesondere unter Verwendung einer solchen Vorrichtung.

Insbesondere für bauindustrielle Zwecke werden überwiegend aus Feststoffpartikeln bestehende Materialien, insbesondere pulver-, staub- oder granulatförmige Materialien, wie zum Beispiel Zement, Gips, Trockenmörtel, Estrich oder Gemische davon, im trockenen Zustand an den Bedarfsort, z. B. an eine Baustelle, angeliefert und dort in einem Vorratsbehälter, insbesondere einem Silo, gelagert. Dort werden diese Materialien bei Bedarf diesem Silo entnommen und mittels einer Fördervorrichtung einer Verarbeitungseinrichtung, etwa einer Putzmaschine oder dergleichen zugeführt. In dieser Verarbeitungseinrichtung wird das Trockenmaterial mit Wasser vermischt und einer weiteren Verarbeitung unterworfen.

Für den Transport des Materials vom Silo zur Verarbeitungseinrichtung wird üblicherweise eine Fördereinrichtung verwendet, die dazu ausgebildet ist, das zu transportierende Material mit Hilfe von Druckluft zu fördern. Diese Fördereinrichtung weist bekanntermaßen ein Fördergefäß mit einer Einlassöffnung auf, welche an eine Auslassöffnung des Silos angeschlossen wird, so dass das im Silo gelagerte Material dem Fördergefäß zugeführt werden kann. Das Fördergefäß umfasst weiterhin einen Auslass, an den üblicherweise eine Förderleitung zur Ankopplung an die Verarbeitungseinrichtung angesetzt wird.

Eine solche Fördereinrichtung ist aus der deutschen Gebrauchsmusterschrift DE 20 2008 013 042 U1 bekannt. Darin ist ein Fördergefäß offenbart, welches sich mittels eines Kompressors mit Förderdruckluft beaufschlagen lässt. Das zu transportierende Material wird chargenweise vom Silo in das Fördergefäß geleitet. Im unteren Bereich des Fördergefäßes ist ein Innenraum-Lufteinlass zum Eintrag von Förderluft derart angeordnet, dass die eingetragene Förderluft zum Fördern des Materials auf einen Fördergefäßauslass gerichtet ist.

In Abhängigkeit des spezifischen Gewichts des zu fördernden Materials können Materialverdichtungen, Verstopfungen oder Ähnliches auftreten. Durch Einwirkung der Schwerkraft verursachte Selbstverdichtungen treten insbesondere bei höherem Schüttgewicht auf. Dies bedingt in Folge ein unregelmäßiges Förderverhalten und einen diskontinuierlichen Materialfluss, aufgrund des erhöhten Förderwiderstandes kann auch eine Überlastung der Fördereinrichtung und letztlich eine dauerhafte Beschädigung der selbigen verursacht werden. Zudem ist eine exakte Dosierung des geförderten Materials notwendig, um ein sauberes und effizientes Verarbeiten sicherzustellen.

Aus der EP 1 688 718 A1 sind eine Vorrichtung und ein Verfahren zum Dosieren und zur pneumatischen Förderung schwerfließender Feststoffpartikel bekannt. Die Feststoffpartikel werden in einem Schneckenförderer dosiert. Anschließend wird der Schneckenförderer über eine Förderleitung entleert. Dabei erfolgt die Entleerung des Schneckenförderers durch gleichzeitige mechanische Einwirkung des Schneckenförderers selbst und pneumatische Einwirkung durch ein Druckgas.

Vor diesem Hintergrund stellt sich die vorliegende Erfindung zur Aufgabe, eine Vorrichtung zum Fördern von zumindest überwiegend aus Feststoffpartikeln bestehendem Material gemäß dem Oberbegriff des Patentanspruchs 1 anzugeben, welche einen homogenen Materialfluss insbesondere auch bei zu fördernden Materialien mit erhöhtem Trockengewicht sicherstellt.

Diese Aufgabe wird bei einer Vorrichtung der eingangs genannten Art dadurch gelöst, dass ein Innenraum-Lufteinlass zum Eintrag von Förderluft in den auslassseitigen Innenbereich derart angeordnet bzw. ausgerichtet ist, dass die eingetragene Förderluft im Wesentlichen auf den Fördergefäßauslass gerichtet ist, wobei der Transport des Materials bis zum auslassseitigen Innenbereich des Fördergefäßes durch den Schneckenförderer erfolgt, während der Transport des Materials ab dem auslassseitigen Innenbereich des Fördergefäßes durch die Förderluft erfolgt.

Der Schneckenförderer stellt sicher, dass dem auslassseitigen Innenbereich, zumindest solange im Fördergefäß noch zu förderndes Material enthalten ist, ein stetiger Materialfluss zugeführt werden kann. Die Förderkapazität des Schneckenförderers ist zumindest für die hier in Betracht kommenden Materialien weitestgehend konstant. Daher ist der Materialfluss derart gezielt dosierbar, dass das geförderte Material ausgehend vom auslassseitigen Innenbereich mit Hilfe der eingetragenen Förderluft unter Ausnutzung des Venturi-Effektes weiter durch die Förderleitung transportiert werden kann. Der Schneckenförderer ist ferner dazu geeignet, bereits vorhandene Materialverdichtungen mechanisch aufzubrechen und dient damit zusätzlich zum Auflockern des Förderguts. Dies ist insbesondere für Anwendungen vorteilhaft, bei denen das zu fördernde Material ein erhöhtes spezifisches Gewicht bzw. eine erhöhte Dichte aufweist oder aus anderen Gründen zur Ausbildung von Klumpen oder Pfropfen neigt. Im Ergebnis ist die vorgeschlagene Vorrichtung somit dazu ausgebildet, einen stetigen und homogenen Materialfluss, insbesondere für eine das Material verarbeitende Verarbeitungseinrichtung bereitzustellen.

Das zumindest überwiegend aus Feststoffpartikeln bestehende Material, insbesondere Pulvermaterial, ist beispielsweise ein Trockenmörtel oder Trockenputz, Zement, Estrich oder Mörtel. Entsprechend ist die insbesondere an die Vorrichtung über die Förderleitung angeschlossene oder anschließbare Verarbeitungseinrichtung beispielsweise eine Putzmaschine. Ein gleichmäßiger Förderstrom stellt eine effiziente und saubere Verarbeitung des geförderten Materials sicher.

Dies hat eine Zeitersparnis zur Folge, die sich positiv auf den Arbeitsablauf unabhängig von der weiteren konkreten gegenständlichen Ausbildung des Fördergefä-ßes 3 auswirkt. Es ist daher vorgesehen, stromab vom Fördergefäßauslass 17 einen weiteren Bypass-Lufteinlass 25 auch bei Fördergefäßen vorzusehen, bei denen der Materialtransport innerhalb des Fördergefäßes ohne Zuhilfenahme eines Schneckenförderers, beispielsweise ausschließlich unter Einwirkung der Schwerkraft und/oder von zugeführter Förderluft, erfolgt.

Vorzugsweise umfasst der Schneckenförderer zum Transport des Materials in axialer Richtung zumindest eine um eine Drehachse rotierbare wendelförmige Förderschnecke, die insbesondere bezüglich des Schwerefelds im Wesentlichen horizontal angeordnet ist. Die Förderschnecke ist insbesondere in einem unteren Bereich des Fördergefäßes angeordnet und verläuft beispielsweise in horizontaler Richtung in einer rinnenförmigen Vertiefung eines Gehäuses des Fördergefäßes. Die um die Drehachse rotierbare Förderschnecke definiert im Wesentlichen die Transportstrecke des Schneckenförderers. Vorzugsweise ist zumindest ein Bereich der Förderschnecke frei von oben zugänglich. Wird das Fördergefäß mit Material befüllt, so fällt dieses unter Einfluss der Schwerkraft nach unten in einen Bereich, in dem es mittels des Schneckenförderers in einer im Wesentlichen horizontaler Richtung zum Fördergefäßauslass transportiert werden kann.

Vorzugsweise ist die Förderschnecke zumindest im auslassseitigen Innenbereich von einem, insbesondere zylinderförmigen, Rohrabschnitt umgeben. Diese Ausbildung begünstigt die Zuführung eines wohldosierten Materialstroms zum auslassseitigen Innenbereich, da der für den Materialstrom zur Verfügung stehende Querschnitt begrenzt ist.

Vorzugsweise ist ein Antrieb des Schneckenförderers zum Fördern von Material mit einem spezifischen Gewicht von mehr als 1,3 kg/dm³, bezogen auf das Trockengewicht, ausgelegt. Mit anderen Worten ist der Antrieb des Schneckenförderers dazu ausgelegt, insbesondere Materialien zu fördern, die aufgrund ihres relativ hohen spezifischen Gewichts zur Ausbildung von Verdichtungen tendieren.

Am Fördergefäßauslass ist vorzugsweise eine Förderleitung mit einem absperrbaren Ventil angeschlossen. Ein Bypass-Lufteinlass zum Eintrag von Förderluft ist weiter vorzugsweise stromab von dem Ventil derart angeordnet, dass die eingetragene Förderluft im Wesentlichen vom Fördergefäßauslass weg gerichtet ist, so dass durch Einblasen von Förderluft ein Luftstrom in Richtung der angeschlossenen oder anschließbaren Förderleitung erzeugt werden kann. Über den Bypass-Lufteinlass ist insbesondere auch bei geschlossenem Ventil Förderluft in die angeschlossene oder anschließbare Förderleitung einblasbar. Durch Einblasen von Förderluft über den Bypass-Lufteinlass bei geschlossenem Ventil kann beispielsweise Restmaterial, welches sich in der Förderleitung befindet, abtransportiert und die Förderleitung so frei geblasen werden.

In einem bevorzugten Ausführungsbeispiel umfasst die Vorrichtung zum Fördern von zumindest überwiegend aus Feststoffpartikeln bestehendem Material, insbesondere Pulvermaterial, beispielsweise Trockenmörtel, ein Fördergefäß, das mit einer Einlassöffnung an eine Auslassöffnung eines Vorratsbehälters, zum Beispiel eines Silos, ankoppelbar oder angekoppelt ist. Das Fördergefäß weist einen Fördergefäßauslass auf, an den eine Förderleitung, insbesondere eine Schlauchleitung, anschließbar oder angeschlossen ist. Innerhalb des Fördergefäßes ist das Material in einem möglichen Ausführungsbeispiel ausschließlich durch Einfluss der Schwerkraft, insbesondere über entsprechend schräg angeordnete Wandabschnitte oder Bleche, zu einem auslassseitigen Innenbereich förderbar. In einer anderen Ausgestaltung ist zum Fördern des Materials innerhalb des Fördergefäßes der vorstehend bereits genannte Schneckenförderer vorgesehen. Das Fördergefäß ist weiterhin mit Förderluft zum Transportieren des zu fördernden Materials in Richtung des Fördergefäßauslasses beaufschlagbar oder beaufschlagt. Hierzu weist das Fördergefäß in einem auslassseitigen Innenbereich einen Innenraum-Lufteinlass auf. Am Fördergefäßauslass ist weiterhin eine Förderleitung über ein absperrbares Ventil angeschlossen. Ein Bypass-Lufteinlass zum Eintrag von Förderluft ist weiter vorzugsweise stromab von dem Ventil derart angeordnet ist, dass die über den Bypass-Lufteinlass eingetragene Förderluft im Wesentlichen vom Fördergefäßauslass weg gerichtet ist und somit einen Luftstrom erzeugt, der vom Fördergefäß weg gerichtet ist.

Am Innenraum-Lufteinlass und/oder am Bypass-Lufteinlass sind bevorzugt Anschlussstutzen zur Verbindung mit Druckluftschläuchen vorgesehen.

Ein Durchlassquerschnitt des Ventils ist vorzugsweise steuerbar, insbesondere durch Beaufschlagung mit Druckluft pneumatisch steuerbar. Das Ventil ist in einer bevorzugten Ausgestaltung ein pneumatisches Quetschventil, dessen Durchlassquerschnitt durch Beaufschlagung mit Druckluft variierbar ist. In anderen Ausführungsbeispielen ist der Durchlassquerschnitt des Ventils mechanisch, insbesondere manuell, oder mittels eines elektrischen Aktuators, insbesondere mittels eines Elektroantriebs verstellbar.

Vorzugsweise ist ein Drucksensor zur Erfassung und/oder Überwachung des Druckes innerhalb der Förderleitung vorgesehen. Mit Hilfe von Druckmessungen können insbesondere Verstopfungen und Engpässe innerhalb der Förderleitung schnell und zuverlässig erkannt werden und entsprechende Gegenmaßnahmen eingeleitet werden, um Überlastungen zu vermeiden.

Bei einem Verfahren zum Fördern von zumindest überwiegend aus Feststoffpartikeln bestehendem Material, insbesondere Pulvermaterial, beispielsweise Trockenmörtel, ist vorgesehen, das Material mittels einer der vorstehend beschriebenen Vorrichtungen zu fördern. Das Fördergefäß wird chargenweise mit Material befüllt. Anschließend, d. h. nach dem Befüllen, wird der Schneckenförderer zum Fördern des Materials der Charge in einem Förderbetrieb insbesondere nach Ablauf einer vorgegebenen oder vorgebaren Zeitspanne aktiviert. Hierzu wird Förderluft über den Innenraum-Lufteinlass eingeblasen, um das Material über die am Fördergefäßauslass angeschlossene oder anschließbare Förderleitung zu transportieren.

Die vorgebbare oder vorgegebene Zeitspanne beträgt vorzugsweise einige Sekunden, insbesondere in etwa drei Sekunden.

Ein Förderbetrieb des Schneckenförderers wird unterbrochen, insbesondere automatisch unterbrochen, wenn der Druck in der Förderleitung einen vorgegebenen oder vorgebaren Grenzwert, insbesondere einige wenige bar, beispielsweise in etwa 1,8 bar, übersteigt. Der vorgegebene oder vorgebare Grenzwert ist hierbei insbesondere mit einer zumindest teilweisen verstopften Förderleitung assoziiert. Nach Erreichen des Grenzwertes wird weiterhin Förderluft über den Innenraum-Lufteinlass und/oder über den Bypass-Lufteinlass eingeblasen, um den Engpass in der Förderleitung frei zu spülen.

Der Schneckenförderer wird weiter vorzugsweise zum Fördern von Material im Förderbetrieb betrieben, insbesondere automatisch zum Fördern von Material nach einer vorhergehenden Unterbrechung reaktiviert und betrieben, wenn der Druck in der Förderleitung einen vorgegebenen oder vorgebaren Schwellwert, der unterhalb des Grenzwertes liegt, unterschreitet. Der vorgebbare oder vorgegebene Schwellwert ist insbesondere mit einem regulären Förderverhalten assoziiert und entspricht einem Druck, der beim Fördern des Materials typischerweise auftreten kann. Der vorgegebene oder vorgebare beträgt insbesondere einige wenige bar, beispielsweise in etwa 1,5 bar.

Der Fördergefäßauslass wird vorzugsweise zum insbesondere chargen- oder intervallweisen Befüllen des Fördergefäßes mit Material mittels des Ventils abgesperrt. Während des Befüllvorgangs wird besonders bevorzugt weiterhin Förderluft über den Bypass-Lufteinlass eingeblasen. Da im Allgemeinen in der Förderleitung zu Beginn des Befüllvorgangs weiterhin Material vorhanden ist, kann dieses weiterhin gefördert werden, während das Fördergefäß befüllt wird. Auf diese Weise kann zum einen die Zeitspanne, die zum Befüllen des Fördergefäßes notwendig ist, zumindest zum Teil dazu genutzt werden, weiterhin Material in Richtung der insbesondere am Ende der Förderleitung angeschlossenen Verarbeitungseinrichtung zu fördern. Zum anderen wird vermieden, dass in der Förderleitung vorhandenes Material diese während des Befüllvorgangs zusetzt und so Verstopfungen verursacht.

Vorzugsweise wird der Schneckenförderer im Förderbetrieb betrieben und Förderluft insbesondere über den Innenraum-Lufteinlass und/oder den Bypass-Lufteinlass eingeblassen, bis der Druck in der Förderleitung einen Minimalwert, der mit einer leeren Förderleitung und/oder einem leeren Fördergefäß assoziiert ist, unterschreitet.

Der Förderbetrieb des Schneckenförderers und das Einblasen von Förderluft werden vorzugsweise dann unterbrochen, wenn der Druck in der Förderleitung den Minimalwert, insbesondere weniger als 1 bar, beispielsweise in etwa 0,8 bar, erreicht oder unterschreitet. Bei derartigen Förderdrücken ist typischerweise das Fördergefäß bzw. die gegebenenfalls am Fördergefäß angeschlossenen Förderleitung im Wesentlichen vollständig entleert.

Bevorzugt wird zumindest zum Fördern von Material im Förderbetrieb kontinuierlich Förderluft über den Innenraum-Lufteinlass eingeblasen und/oder der Schneckenförderer kontinuierlich betrieben.

Die Erfindung ist im Folgenden anhand der Zeichnungen eines Ausführungsbeispiels näher erläutert. Dabei zeigen:

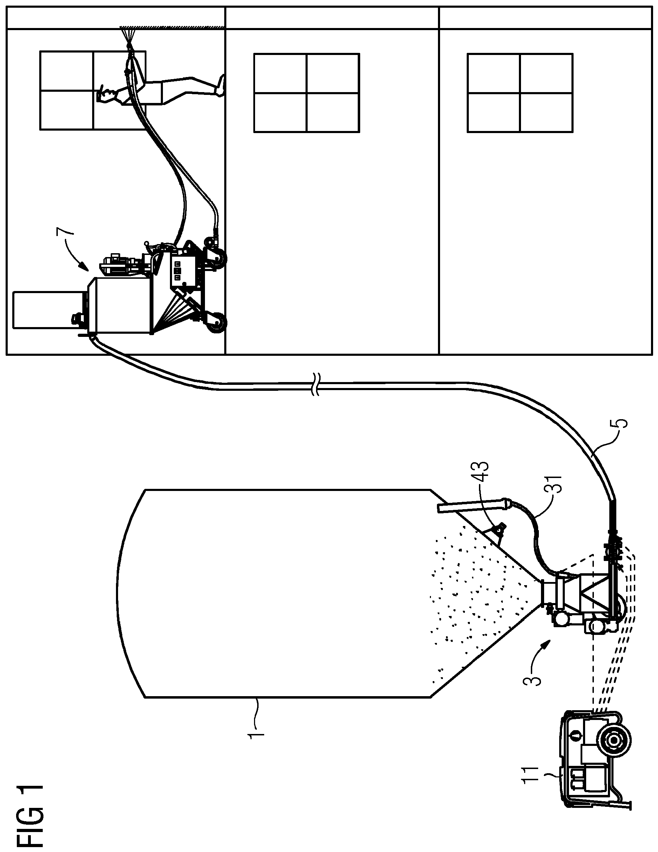

- FIG 1: die Einrichtung einer Baustelle zum Auftrag von Gebäudeputzes, im Wesentlichen umfassend ein Trockenmörtelsilo mit einer zugeordneten Vorrichtung zum Fördern des zu verarbeitenden Materials und einer daran angeschlossenen Putzmaschine und
- FIG 2: die Vorrichtung der FIG 1 in einer vergrößerten Schnittdarstellung.

Einander entsprechende Teile sind in allen Figuren mit den gleichen Bezugszeichen versehen.

Um auf einer Baustelle an einer Gebäudewand einen Putz auftragen zu können, ist zur Lagerung und Ausgabe von Material, insbesondere Trockenmörtelmaterial, ein Silo 1 aufgestellt. Dieses Silo 1 umfasst im dargestellten Ausführungsbeispiel neben einem zylindrischen Oberteil ein kegelstumpfförmiges und damit als Trichter fungierendes Unterteil. Damit der im Silo 1 befindliche Trockenmörtel zur Verarbeitung an eine Verarbeitungseinrichtung 7, im dargestellten Fall an eine Putzmaschine 7 transportiert werden kann, ist am Auslass des Silos 1 ein Fördergefäß 3 angeschlossen. Mittels des Fördergefäßes 3 wird der dem Silo 1 entnommene Trockenmörtel über eine Förderleitung 5 der Verarbeitungseinrichtung 7 zugeführt, in der aus dem Trockenmörtel unter Zugabe von Wasser die zum Verputzen erforderliche Mörtelmasse hergestellt wird und zum direkten Auftrag des Außenputzes entnommen werden kann. Im gezeigten Ausführungsbeispiel ist die Förderleitung 5 als Schlauchleitung ausgebildet.

Der Transport des Trockenmörtels zur Putzmaschine 7 erfolgt pneumatisch oder unter Druckluft. Hierzu ist an das Fördergefäß 3 über eine erste Luftleitung 9 (gestrichelt dargestellt) ein Kompressor 11 angeschlossen, der dem Fördergefäß 3 Druckluft zuführt.

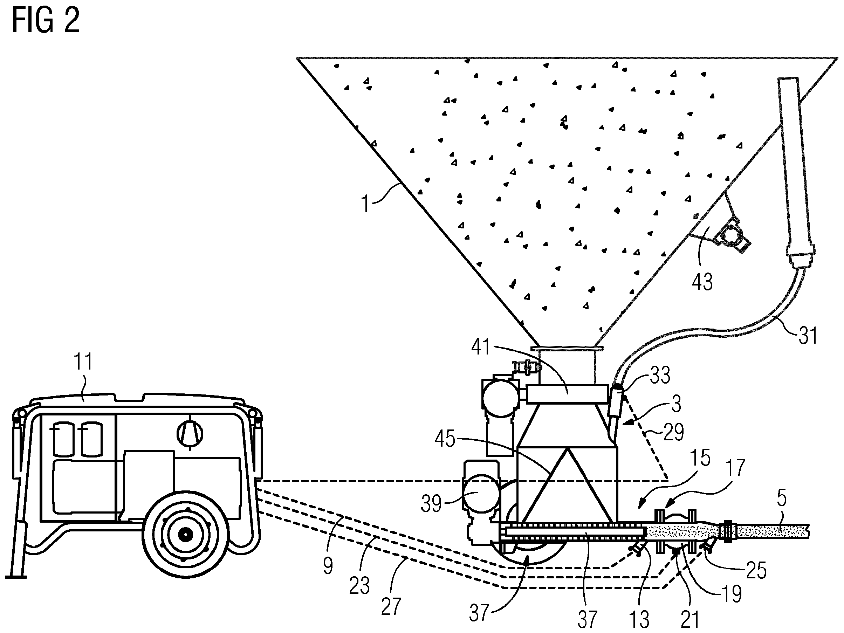

Die erste Luftleitung 9 ist, wie im Detail in Figur 2 dargestellt, mit einem Innenraum-Lufteinlass 13 verbunden, der im auslassseitigen Innenbereich 15 eines Fördergefäßauslasses 17 angeordnet ist. Dabei ist der Innenraum-Lufteinlass 13 als Förderdüse ausgebildet, die in Richtung des Fördergefäßauslasses 17 orientiert ist, so dass ein Luftstrom entlang der am Fördergefäß 3 angeschlossenen Förderleitung 5 erzeugbar ist.

Zwischen der Förderleitung 5 und dem Fördergefäßauslass 17 ist ein absperrbares Ventil 19 angeordnet, welches als pneumatisches Quetschventil ausgebildet ist und einen Anschluss 21 zur Zuführung von Steuerluft über eine zweite Luftleitung 23 (gestrichelt dargestellt) aufweist.

Stromab vom Fördergefäßauslass 17 befindet sich ein Bypass-Lufteinlass 25, über den Förderluft in die Förderleitung 5 auch bei geschlossenem Ventil 19 eingeblasen werden kann. Hierzu ist der Bypass-Lufteinlass 25 als Förderdüse ausgebildet und mit dem Kompressor 11 über eine dritte Luftleitung 27 verbunden.

Eine vierte Luftleitung 29 verbindet den Kompressor 11 mit einem weiteren als Quetschventil ausgebildeten Ventil 33 zur Zuführung von Steuerluft. Über das weitere Ventil 33 ist eine Entlüftungsleitung 31 am Fördergefäß 3 angeschlossen. Der Durchlassquerschnitt des weiteren Ventils 33 kann pneumatisch durch Zuführung der Steuerluft verändert werden.

Im unteren Bereich des Fördergefäßes 3 ist ein Schneckenförderer 35 eingebaut, der dem auslassseitigen Innenbereich 15 während des Förderbetriebs stetig Material zuführt. Der Schneckenförderer 35 umfasst eine um eine horizontal verlaufende Drehachse rotierbare Förderschnecke 37, die mittels eines elektrischen oder pneumatischen Antriebs 39 zum Fördern von Material in eine Drehbewegung versetzbar ist. Die Transportstrecke des Schneckenförderers 35 endet im auslassseitigen Innenbereich 15, der randseitig von einem Rohrabschnitt umgeben ist. Diese Ausbildung dient dazu, einen stets wohldosierten Materialfluss zu fördern, der durch die eingetragene Förderluft unter Ausnutzung des Venturi-Effekts weiter über die Förderleitung 5 transportiert werden kann.

Das Fördergefäß 3 wird im Betrieb chargenweise mit Trockenmörtelmaterial aus dem Silo 1 befüllt. Hierzu wird eine Siloklappe 41 bei geschlossenem Ventil 19 geöffnet, so dass Material von oben in das Fördergefäß 3 fallen kann. Gegebenenfalls werden mit Hilfe eines pneumatischen oder elektrischen Rüttlers 43 Schwingungen erzeugt, um den Materialfluss nach unten in Richtung des Fördergefäßes 3 zu unterstützen. Das eingefüllte Material gelangt über schräg verlaufende Schüttbleche 45 unter Einwirkung der Schwerkraft in den unteren Bereich des Fördergefäßes 3, in dem der Schneckenförderer 35 angeordnet ist. Dieser Vorgang erfordert in Abhängigkeit der Dichte des eingefüllten Materials typischerweise einige wenige Sekunden, insbesondere etwa 10 Sekunden. Anschließend wird die Siloklappe 41 geschlossen, das Ventil 19 geöffnet und Luft über den Innenraum-Lufteinlass 13 eingetragen, um das eingefüllte Material zu fluidisieren. Der Schneckenförderer 35 wird beispielsweise drei Sekunden nach dem Schließen der Siloklappe 41 insbesondere automatisch aktiviert.

Im Förderbetrieb wird dem auslassseitigen Innenbereich 15 ein stetiger Materialstrom zugeführt, der von dem über den Innenraum-Lufteinlass 13 eingetragenen Luftstrom über die Förderleitung 5 zur Verarbeitungseinrichtung 7 transportiert wird. Ein nicht näher dargestellter Drucksensor misst und überwacht den Druck innerhalb der Förderleitung 5 insbesondere im Förderbetrieb. Erreicht oder übersteigt dieser Druck einen vorgegebenen oder beispielsweise über eine entsprechende Benutzereingabe vorgebbaren Grenzwert, welcher mit einer Verstopfung verknüpft ist, so wird der Antrieb 39 des Schneckenförderers 35 manuell oder automatisch gestoppt, um die weitere Materialzufuhr zu unterbinden. Währenddessen wird weiterhin Förderluft über den Innenraum-Lufteinlass 13 eingeblasen, um den Engpass in Förderleitung 5 frei zu blasen.

Der Grenzwert hängt im Allgemeinen von der Beschaffenheit des geförderten Materials und insbesondere von dessen spezifischem Gewicht und von der Länge der Förderleitung 5 ab. In einem konkreten Anwendungsfall beträgt die Dichte des geförderten Materials in etwa 1,3 kg/dm³. Der mit Verstopfungen bzw. Engpässen in der Förderleitung 5 assoziierte Grenzwert kann in diesem Fall etwa 1,8 bar betragen.

Nach Erreichen oder Unterschreiten eines Schwellwerts, der unterhalb des Grenzwerts liegt und typischerweise mit einem Druck verknüpft ist, der beim regulären Förderbetrieb auftreten kann, wird der Schneckenantrieb 35 manuell oder automatisch reaktiviert und betrieben. Der Schwellwert beträgt in dem vorstehend exemplarisch genannten Anwendungsfall in etwa 1,5 bar.

Zur automatischen Betätigen des Antriebs 39 und/oder der Luftzufuhr, insbesondere in Abhängigkeit der mittels des Drucksensors erfassten Drücke, ist in einem möglichen Ausführungsbeispiel eine nicht näher dargestellte Steuereinheit vorgesehen, die mit dem Drucksensor, dem Antrieb 39 und/oder dem Kompressor 11 in einer entsprechenden Wirkverbindung steht.

Fällt der Druck innerhalb der Förderleitung 5 unter einen Minimalwert, der beispielsweise etwa 0,8 bar beträgt, so zeigt dies eine leere Förderleitung 5 bzw. ein leeres Fördergefäß 3 an. Der Förderbetrieb wird in diesem Fall durch eine entsprechende Benutzereingabe oder automatisch unterbrochen, d. h. es wird sowohl der Betrieb des Schneckenförderers 35 als auch die Luftzufuhr über den Innenraum-Lufteinlass 13 unterbrochen. Das Ventil 19 wird zum Befüllen des Fördergefäßes 3 geschlossen. Während des Befüllvorgangs wird weiterhin Förderluft über den Bypass-Lufteinlass 25 in die Förderleitung 5 eingeblasen, um das darin befindliche Material in der Zwischenzeit in Richtung der Verarbeitungseinrichtung 7 zu transportieren. Zudem wird beim Befüllen das Ventil 33 geöffnet, um die Entlüftungsleitung 31 freizugeben. Durch diese Maßnahme können Materialverdichtungen beim Befüllen vermieden werden.

Das vorstehend beschriebene Ausführungsbeispiel zeigt nur eine mögliche Darstellungsform der Erfindung auf. Diese lässt sich jedoch auch noch durch verschiedenste weitere Wege realisieren. So kann zum Beispiel der Schneckenförderer 35 schräg bezüglich des Schwerefelds orientiert oder weitere Schüttbleche innerhalb des Fördergefäßes 3 zum Verteilen des aus dem Silo 1 zugeführten Materials vorgesehen sein. Ein weiterer Aspekt betrifft die Zuführung von Förderluft über den Bypass-Lufteinlass 25. Dies ermöglicht ein Freiblasen der Förderleitung 5 auch bei geschlossenem Ventil 19, so dass der Verarbeitungseinrichtung 7 insbesondere während des Befüllens des Fördergefäßes 3 weiterhin Material zugeführt werden kann. Dies hat eine Zeitersparnis zur Folge, die sich positiv auf den Arbeitsablauf unabhängig von der weiteren konkreten gegenständlichen Ausbildung des Fördergefä-ßes 3 auswirkt. Es ist daher vorgesehen, stromab vom Fördergefäßauslass 17 einen weiteren Bypass-Lufteinlass 25 auch bei Fördergefäßen vorzusehen, bei denen der Materialtransport innerhalb des Fördergefäßes ohne Zuhilfenahme eines Schneckenförderers, beispielsweise ausschließlich unter Einwirkung der Schwerkraft und/oder von zugeführter Förderluft, erfolgt.

### Bezugszeichen liste

- 1: Silo
- 3: Fördergefäß
- 5: Förderleitung
- 7: Verarbeitungseinrichtung
- 9: Luftleitung
- 11: Kompressor
- 13: Innenraum-Lufteinlass
- 15: auslassseitiger Innenbereich
- 17: Fördergefäßauslass
- 19: Ventil
- 21: Anschluss
- 23: Luftleitung
- 25: Bypass-Lufteinlass
- 27: Luftleitung
- 29: Luftleitung
- 31: Entlüftungsleitung
- 33: Ventil
- 35: Schneckenförderer
- 37: Förderschnecke
- 39: Antrieb
- 41: Siloklappe
- 43: Rüttler
- 45: Schüttblech

## Patentansprüche

1. Vorrichtung zum Fördern von zumindest überwiegend aus Feststoffpartikeln bestehendem Material, insbesondere Pulvermaterial, beispielsweise Trockenmörtel, mit einem Fördergefäß (3), das mit einer Einlassöffnung an eine Auslassöffnung eines Vorratsbehälters, zum Beispiel eines Silos (1), ankoppelbar oder angekoppelt ist, wobei das Fördergefäß (3) einen Fördergefäßauslass (17) aufweist, an den eine Förderleitung (5), insbesondere eine Schlauchleitung, anschließbar oder angeschlossen ist, wobei das Fördergefäß (3) mit Förderluft zum Transportieren des zu fördernden Materials in Richtung des Fördergefäßauslasses (17) beaufschlagbar oder beaufschlagt ist, wobei zumindest teilweise innerhalb des Fördergefäßes (3) ein Schneckenförderer (35) zum Transport und Dosierung von Material angeordnet ist, dessen Transportstrecke zu einem auslassseitigen Innenbereich (15) des Fördergefäßes (3) führt, **dadurch gekennzeichnet, dass** ein Innenraum-Lufteinlass (13) zum Eintrag von Förderluft in den auslassseitigen Innenbereich derart angeordnet ist, dass die eingetragene Förderluft im Wesentlichen auf den Fördergefäßauslass (17) gerichtet ist, wobei der Transport des Materials bis zum auslassseitigen Innenbereich (15) des Fördergefäßes (3) durch den Schneckenförderer (35) erfolgt, während der Transport des Materials ab dem auslassseitigen Innenbereich (15) des Fördergefäßes (3) durch die Förderluft erfolgt.

2. Vorrichtung nach Anspruch 1, **dadurch gekennzeichnet, dass** der Schneckenförderer (35) zum Transport des Materials in axialer Richtung zumindest eine um eine Drehachse rotierbare wendelförmige Förderschnecke (37) umfasst, die insbesondere bezüglich des Schwerefelds im Wesentlichen horizontal angeordnet ist.

3. Vorrichtung nach Anspruch 1 oder 2, **dadurch gekennzeichnet, dass** die Förderschnecke (37) zumindest im auslassseitigen Innenbereich (17) von einem, insbesondere zylinderförmigen, Rohrabschnitt umgeben ist.

4. Vorrichtung nach einem der vorhergehenden Ansprüche, **dadurch gekennzeichnet, dass** ein Antrieb (39) des Schneckenförderers (35) zum Fördern von Material mit einem spezifischen Gewicht von mehr als 1,3 kg/dm³ ausgelegt ist.

5. Vorrichtung insbesondere nach einem der vorhergehenden Ansprüche, **dadurch gekennzeichnet, dass** am Fördergefäßauslass (17) eine Förderleitung (5) mit einem absperrbaren Ventil (19) angeschlossen ist, wobei ein Bypass-Lufteinlass (25) zum Eintrag von Förderluft stromab von dem Ventil (19) derart angeordnet ist, dass die eingetragene Förderluft im Wesentlichen vom Fördergefäßauslass (17) weg gerichtet ist.

6. Vorrichtung nach Anspruch 5, **dadurch gekennzeichnet, dass** ein Durchlassquerschnitt des Ventils (19) steuerbar, insbesondere durch Beaufschlagung mit Druckluft pneumatisch steuerbar ist.

7. Vorrichtung nach einem der vorhergehenden Ansprüche, **dadurch gekennzeichnet, dass** ein Drucksensor zur Erfassung und/oder Überwachung des Druckes innerhalb der Förderleitung (5) vorgesehen ist.

8. Verfahren zum Fördern von zumindest überwiegend aus Feststoffpartikeln bestehendem Material, insbesondere Pulvermaterial, beispielsweise Trockenmörtel, **dadurch gekennzeichnet, dass** das Fördern des Materials mittels einer Vorrichtung gemäß einem der vorhergehenden Ansprüchen erfolgt, wobei das Fördergefäß (3) chargenweise mit Material befüllt wird und anschließend der Schneckenförderer (35) zum Fördern des Materials der Charge in einem Förderbetrieb insbesondere nach Ablauf einer vorgegebenen oder vorgebaren Zeitspanne aktiviert wird und Förderluft über den Innenraum-Lufteinlass (13) eingeblasen wird.

9. Verfahren nach Anspruch 8, **dadurch gekennzeichnet, dass** die Zeitspanne einige Sekunden, insbesondere in etwa drei Sekunden beträgt.

10. Verfahren nach Anspruch 8 oder 9, **dadurch gekennzeichnet, dass** der Förderbetrieb des Schneckenförderers (35) unterbrochen, insbesondere automatisch unterbrochen wird, wenn der Druck in der Förderleitung (5) einen vorgegebenen oder vorgebaren Grenzwert, insbesondere einige wenige bar, beispielsweise in etwa 1,8 bar übersteigt, wobei nach Erreichen des Grenzwerts Förderluft über den Innenraum-Lufteinlass (13) und/oder über den Bypass-Lufteinlass (25) eingeblasen wird.

11. Verfahren nach einem der vorhergehenden Ansprüche 8 bis 10, **dadurch gekennzeichnet, dass** der Schneckenförderer (35) zum Fördern von Material im Förderbetrieb betrieben, insbesondere automatisch aktiviert und betrieben wird, wenn der Druck in der Förderleitung (5) einen vorgegebenen oder vorgebaren Schwellwert, der insbesondere unterhalb des Grenzwertes liegt und einige wenige bar, beispielsweise in etwa 1,5 bar beträgt, unterschreitet.

12. Verfahren insbesondere nach einem der vorhergehenden Ansprüche 8 bis 11, **dadurch gekennzeichnet, dass** der Fördergefäßauslass zum insbesondere chargen- oder intervallweisen Befüllen des Fördergefäßes (3) mit Material mittels des Ventils (19) abgesperrt wird, wobei während des Befüllvorgangs Förderluft über den Bypass-Lufteinlass (25) eingeblasen wird.

13. Verfahren nach einem der vorhergehenden Ansprüche 8 bis 12, **dadurch gekennzeichnet, dass** der Förderbetrieb des Schneckenförderers (35) und das Einblasen von Förderluft, insbesondere über den Innenraum-Lufteinlass (13) und/oder den Bypass-Lufteinlass (25), unterbrochen, insbesondere automatisch unterbrochen wird, wenn der Druck in der Förderleitung (5) einen Minimalwert, der mit einer leeren Förderleitung (5) und/oder einem leeren Fördergefäß (3) assoziiert ist, unterschreitet.

14. Verfahren nach Anspruch 13, **dadurch gekennzeichnet, dass** der Minimalwert weniger als 1 bar, beispielsweise in etwa 0,8 bar, beträgt.

15. Verfahren nach einem der Ansprüche 8 oder 14, **dadurch gekennzeichnet, dass** zumindest zum Fördern von Material im Förderbetrieb kontinuierlich Förderluft über den Innenraum-Lufteinlass (13) eingeblasen wird und/oder der Schneckenförderer (35) kontinuierlich betrieben wird.

## Claims

1. Device for conveying material consisting at least predominantly of solid particles, in particular powder material, for example dry mortar, with a conveying vessel (3) which can be coupled or is coupled with an inlet opening to an outlet opening of a storage container, for example a silo (1), wherein the conveying vessel (3) has a conveying vessel outlet (17) to which a conveying line (5), in particular a hose line, can be connected or is connected, wherein the conveying vessel (3) can be acted upon or is acted upon by conveying air for transporting the material to be conveyed in the direction of the conveying vessel outlet (17), wherein a screw conveyor (35) for transporting and metering material is arranged at least partially within the conveying vessel (3), the transport path of which screw conveyor leads to an outlet-side inner region (15) of the conveying vessel (3), **characterized in that** an interior air inlet (13) for introducing conveying air into the outlet-side inner region is arranged in such a way, that the conveying air introduced is essentially directed towards the conveying vessel outlet (17), the material being transported as far as the outlet-side inner region (15) of the conveying vessel (3) by the screw conveyor (35), while the material is transported from the outlet-side inner region (15) of the conveying vessel (3) by the conveying air.

2. Device according to claim 1, **characterized in that** the screw conveyor (35) for transporting the material in the axial direction comprises at least one helical screw conveyor (37) which can be rotated about an axis of rotation and which is arranged essentially horizontally, in particular with respect to the gravitational field.

3. Device according to claim 1 or 2, **characterized in that** the screw conveyor (37) is surrounded, at least in the outlet-side inner region (17), by a tube section, in particular a cylindrical tube section.

4. Device according to one of the preceding claims, **characterized in that** a drive (39) of the screw conveyor (35) is designed for conveying material with a specific weight of more than 1.3 kg/dm³.

5. Device, in particular according to one of the preceding claims, **characterized in that** a conveying line (5) with a valve (19) which can be shut off is connected to the conveying vessel outlet (17), a bypass air inlet (25) for introducing conveying air being arranged downstream of the valve (19) in such a way that the conveying air introduced is directed essentially away from the conveying vessel outlet (17).

6. Device according to claim 5, **characterized in that** a passage cross-section of the valve (19) is controllable, in particular pneumatically controllable by applying compressed air.

7. Device according to one of the preceding claims, **characterized in that** a pressure sensor is provided for detecting and/or monitoring the pressure within the conveying line (5).

8. Method for conveying material consisting at least predominantly of solid particles, in particular powder material, for example dry mortar, **characterized in that** the material is conveyed by means of a device according to one of the preceding claims, the conveying vessel (3) being filled with material in batches and then the screw conveyor (35) for conveying the material of the batch being activated in a conveying operation, in particular after a predetermined or predeterminable period of time has elapsed, and conveying air being blown in via the interior air inlet (13).

9. Method according to claim 8, **characterized in that** the time interval is a few seconds, in particular about three seconds.

10. Method according to claim 8 or 9, **characterized in that** the conveying operation of the screw conveyor (35) is interrupted, in particular automatically interrupted, when the pressure in the conveying line (5) exceeds a predetermined or predeterminable limit value, in particular a few bar, for example approximately 1.8 bar, conveying air being blown in via the interior air inlet (13) and/or via the bypass air inlet (25) after the limit value has been reached.

11. Method according to one of the preceding claims 8 to 10, **characterized in that** the screw conveyor (35) for conveying material is operated in conveying mode, in particular activated and operated automatically, when the pressure in the conveying line (5) falls below a predetermined or predeterminable threshold value, which is in particular below the limit value and is a few bar, for example approximately 1.5 bar.

12. Method in particular according to one of the preceding claims 8 to 11, **characterized in that** the conveying vessel outlet is shut off by means of the valve (19) for filling the conveying vessel (3) with material in particular in batches or at intervals, conveying air being blown in via the bypass air inlet (25) during the filling process.

13. Method according to one of the preceding claims 8 to 12, **characterized in that** the conveying operation of the screw conveyor (35) and the injection of conveying air, in particular via the interior air inlet (13) and/or the bypass air inlet (25), is interrupted, in particular automatically, when the pressure in the conveying line (5) falls below a minimum value associated with an empty conveying line (5) and/or an empty conveying vessel (3).

14. Method according to claim 13, **characterized in that** the minimum value is less than 1 bar, for example approximately 0.8 bar.

15. Method according to one of claims 8 or 14, **characterized in that** conveying air is continuously blown in via the interior air inlet (13) and/or the screw conveyor (35) is continuously operated at least for conveying material during conveying operation.

## Revendications

1. Dispositif pour transporter un matériau constitué au moins principalement de particules solides, en particulier un matériau en poudre, par exemple du mortier sec, avec un récipient de transport (3) qui peut être couplé ou est couplé par une ouverture d'entrée à une ouverture de sortie d'un réservoir de stockage, par exemple un silo (1), le récipient de transport (3) présentant une sortie de récipient de transport (17) à laquelle peut être raccordée ou est raccordée une conduite de transport (5), en particulier une conduite flexible, le récipient de transport (3) pouvant être alimenté ou étant alimenté en air de transport pour transporter le matériau à transporter en direction de la sortie de récipient de transport (17), un convoyeur à vis (35) étant disposé au moins partiellement à l'intérieur du récipient de transport (3) pour le transport et le dosage de matériau, dont le trajet de transport mène à une zone intérieure (15) côté sortie du récipient de transport (3), **caractérisé en ce qu'**une entrée d'air intérieure (13) est disposée pour l'introduction d'air de transport dans la zone intérieure côté sortie de telle manière, que l'air de transport introduit est essentiellement dirigé vers la sortie (17) du récipient de transport, le transport du matériau jusqu'à la zone intérieure (15) côté sortie du récipient de transport (3) étant effectué par le transporteur à vis (35), tandis que le transport du matériau à partir de la zone intérieure (15) côté sortie du récipient de transport (3) est effectué par l'air de transport.

2. Dispositif selon la revendication 1, **caractérisé en ce que** le transporteur à vis (35) comprend, pour le transport du matériau dans la direction axiale, au moins une vis transporteuse hélico dale (37) pouvant tourner autour d'un axe de rotation, qui est disposée sensiblement horizontalement, en particulier par rapport au champ de gravité.

3. Dispositif selon la revendication 1 ou 2, **caractérisé en ce que** la vis transporteuse (37) est entourée, au moins dans la zone intérieure (17) côté sortie, par une section de tube, en particulier cylindrique.

4. Dispositif selon l'une des revendications précédentes, **caractérisé en ce qu'**un entraînement (39) du convoyeur à vis (35) est conçu pour transporter des matériaux ayant un poids spécifique supérieur à 1,3 kg/dm³ .

5. Dispositif notamment selon l'une des revendications précédentes, **caractérisé en ce qu'**à la sortie (17) du récipient de transport est raccordée une conduite de transport (5) comportant une vanne (19) pouvant être fermée, une entrée d'air de dérivation (25) pour l'introduction d'air de transport étant disposée en aval de la vanne (19) de telle sorte que l'air de transport introduit est essentiellement dirigé à l'opposé de la sortie (17) du récipient de transport.

6. Dispositif selon la revendication 5, **caractérisé en ce qu'**une section de passage de la soupape (19) peut être commandée, en particulier commandée pneumatiquement en l'alimentant en air comprimé.

7. Dispositif selon l'une des revendications précédentes, **caractérisé en ce qu'**un capteur de pression est prévu pour détecter et/ou surveiller la pression à l'intérieur de la conduite de transport (5).

8. Procédé pour transporter un matériau constitué au moins principalement de particules solides, en particulier un matériau en poudre, par exemple du mortier sec, **caractérisé en ce que** le transport du matériau s'effectue au moyen d'un dispositif selon l'une des revendications précédentes, le récipient de transport (3) étant rempli par lots de matériau et le transporteur à vis (35) étant ensuite activé pour transporter le matériau du lot dans un mode de transport, en particulier après l'écoulement d'un laps de temps prédéterminé ou prédéfini, et de l'air de transport étant insufflé par l'entrée d'air intérieure (13).

9. Procédé selon la revendication 8, **caractérisé en ce que** l'intervalle de temps est de quelques secondes, en particulier d'environ trois secondes.

10. Procédé selon la revendication 8 ou 9, **caractérisé en ce que** le fonctionnement de transport du transporteur à vis (35) est interrompu, en particulier automatiquement, lorsque la pression dans la conduite de transport (5) dépasse une valeur limite prédéterminée ou prédéfinie, en particulier quelques bars, par exemple environ 1,8 bar, de l'air de transport étant injecté par l'entrée d'air intérieure (13) et/ou par l'entrée d'air de dérivation (25) une fois la valeur limite atteinte.

11. Procédé selon l'une quelconque des revendications précédentes 8 à 10, **caractérisé en ce que** le transporteur à vis (35) pour le transport de matériau en mode de transport fonctionne, en particulier est activé et fonctionne automatiquement, lorsque la pression dans la conduite de transport (5) est inférieure à une valeur seuil prédéterminée ou prédéfinie, qui est en particulier inférieure à la valeur limite et est de quelques bars, par exemple d'environ 1,5 bar.

12. Procédé notamment selon l'une des revendications précédentes 8 à 11, **caractérisé en ce que** la sortie du récipient de transport est fermée au moyen de la vanne (19) pour le remplissage notamment par lots ou par intervalles du récipient de transport (3) avec un matériau, de l'air de transport étant injecté par l'entrée d'air de dérivation (25) pendant le processus de remplissage.

13. Procédé selon l'une quelconque des revendications précédentes 8 à 12, **caractérisé en ce que** l'opération de convoyage du convoyeur à vis (35) et l'injection d'air de convoyage, notamment par l'intermédiaire de l'entrée d'air intérieure (13) et/ou de l'entrée d'air de dérivation (25), sont interrompues, notamment automatiquement, lorsque la pression dans la conduite de convoyage (5) devient inférieure à une valeur minimale associée à une conduite de convoyage (5) vide et/ou à un récipient de convoyage (3) vide.

14. Procédé selon la revendication 13, **caractérisé en ce que** la valeur minimale est inférieure à 1 bar, par exemple d'environ 0,8 bar.

15. Procédé selon l'une quelconque des revendications 8 ou 14, **caractérisé en ce qu'**au moins pour le transport de matériau en mode de transport, de l'air de transport est injecté en continu via l'entrée d'air intérieure (13) et/ou le convoyeur à vis (35) est actionné en continu.
